# EUROPEAN PATENT APPLICATION

(11) **EP 4 687 265 A1**
(43) Date of publication of application: **04.02.2026**
(21) Application number: 24192657.5
(22) Date of filing: 02.08.2024
(51) Int. Cl.: H02J 50/12, H02J 50/80, H04B 5/79

(54) **WIRELESS POWER TRANSFER**

(71) Applicant: Koninklijke Philips N.V., 5656 AG Eindhoven (NL)
(72) Inventor: AGAFONOV, Aleksei, 5656 AG Eindhoven (NL); STARING, Antonius Adriaan Maria, 5656 AG Eindhoven (NL); VELTMAN, Eddy Gerrit, 5656 AG Eindhoven (NL)
(74) Representative: Philips Intellectual Property & Standards

(57) **Abstract**

A wireless power transmitter (101) providing power to a power receiver (105) comprises a power transfer coil (103) generates a power transfer signal in response to a drive signal. A driver (201) generates the drive signal and a sense circuit (209) generates a measured output circuit signal being a signal describing at least one of a current, voltage, and power signal of a signal of an output circuit (103, 203) including the power transfer coil (203), A data receiver circuit (207) receives data from the power receiver (105) using a synchronous detector (701) which generates data value estimates from a downconverted signal generated by downconverting the measured output circuit signal using a downconversion signal having a reference frequency. An output generator (703) generates the received data values from the data value estimates. The downconversion frequency is a higher harmonic frequency of a drive frequency which is the frequency of the drive signal.

## Description

### FIELD OF THE INVENTION

The invention relates to wireless power transfer and in particular, but not exclusively, to communication in a power transfer system such as the Qi wireless power transfer Specifications.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply wherein power is inductively transferred from a transmitter coil in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being developed further. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can e.g. be found on their website: http://www.wirelesspowerconsortium.com/index.html, where in particular the defined Specification documents can be found.

In order to support efficient wireless power transfer, wireless power transfer systems, such as Qi based systems, utilize substantial communication between the power transmitter and the power receiver.

Communication is an essential part of most wireless power systems. It is for example used to establish the control loop between the power receiver and the transmitter, the parameters of the power transmission are negotiated, and auxiliary and control data is transferred. Communications from the power receiver to the power transmitter might be considered more important as such communications guarantee the safe power transfer, closing the control loop etc. Such communication channels from the power receiver to the power transmitter can be established in a band or out of the band of the power signal. In many cases, in-band communication channel is considered preferable as it provides limited complexity and cost increase of the wireless power system. Although it has been proposed to use separate and dedicated out-of-band communication functionality such as e.g. Bluetooth or NFC (Near Field Communication) based communication which may tend to provide efficient operation in many scenarios, they are also associated with a number of disadvantages, including requiring dedicated and complex communication circuitry and potentially a reduced certainty that the power transmitter is indeed communicating with the power receiver that is being supplied with power.

A common in-band communication method for transmitting data from the power receiver to the power transmitter is load modulation of the power transfer signal itself. In such load modulation, the power receiver alternates the load of the power receive coil, and specifically changes its own resonance properties, so that the load change can be observed by the power transmitter. Such load modulation is used in Qi power transfer systems to establish communication from the power receiver to the power transmitter.

However, current load modulation approaches tend to not have ideal performance in all scenarios. For example, load modulation communication as e.g. used in the initial versions of the Qi Specifications, may not have perfect reliability and some bit errors may possibly occur in some cases. For example, high levels of noise or (self-)interference may result in bit errors and/or may require an increased modulation depth which may result in increased electrical or acoustic noise resulting from the load modulation. In some cases and for some operating points, the effect of load modulation may not be detectable at the power receiver due to the power transfer function attenuating the load variations.

Although it may in some ways be desired to change to a different communication approach, maintaining backwards compatibility or reducing the amount of change needed for existing designs and approaches is a prime challenge that often renders this unattractive.

Hence, an improved approach would be advantageous, in particular, an improved approach for load modulation allowing increased flexibility, reduced cost, reduced complexity, improved power transfer operation, increased reliability, reduced communication errors, improved backwards compatibility, improved electromagnetic compatibility, reduced electrical and/or acoustic noise, improved communication, a more stable power transfer, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention, there is provided a wireless power transmitter for wirelessly providing power to a power receiver via an electromagnetic power transfer signal, the power transmitter comprising: an output circuit comprising a power transfer coil arranged to generate the electromagnetic power transfer signal in response to a drive signal being provided to the output circuit; a driver arranged to generate the drive signal for the output circuit to generate the electromagnetic power transfer signal; a data receiver circuit arranged to receive data from the power receiver, the data being load modulated on the electromagnetic power transfer signal; and a sense circuit arranged to generate a measured output circuit signal being a signal describing at least one of a current, voltage, and power signal of the output circuit; and wherein the data receiver circuit comprises: a first synchronous detector being arranged to generate first data value estimates from a first downconverted signal generated by downconverting the measured output circuit signal using a first downconversion signal having a first reference frequency; an output generator arranged to generate the received data values in dependence on the first data value estimates; and the first downconversion frequency is a higher harmonic frequency of a drive frequency being a frequency of the drive signal.

The invention may allow improved performance in many embodiments and may in particular in many embodiments allow improved communication between a power receiver and a power transmitter. The approach may allow, facilitate, or enable improved power transfer in many embodiments.

In many embodiments and applications, the approach may provide a more reliable and robust communication resulting in improved and more reliable power transfer performance.

The approach may in particular mitigate and/or reduce sensitivity to communication "black holes" where changes in the modulation load at the power receiver does not result in a(n easily) detectable variation at the power transmitter side. The approach may further provide improved resistance and robustness to spurious oscillations or narrow band interference which may often occur around the drive frequency.

In many embodiments, the output circuit may comprise a capacitor. The output circuit may be a resonance circuit comprising the power transfer coil and the capacitor. The power transmitter may comprise a power transmitter controller which is arranged to adapt the power transfer/an operating parameter of the power transfer dependent on the received data values.

In many embodiments, the output circuit consists of a resonance circuit comprising the power transfer coil and a resonance capacitor. The measured output circuit signal may specifically be a current and/or voltage of the power transfer coil and/or of the resonance capacitor.

A higher harmonic frequency may be a frequency which is an integer (>1) multiple of a fundamental frequency, which in the present case is the frequency of the drive signal, i.e. the drive frequency. The higher harmonic frequency of the drive frequency is a frequency that is (substantially, say within less than 1%, 2%, 5% or 10%) an integer multiple of the drive frequency, the integer being 2 or higher.

In some embodiments, the load modulation may employ a spread spectrum load modulation communication scheme, which may be a Direct Sequence Spread Spectrum (DSSS) or specifically a Differential Direct Sequence Spread Spectrum (DDSSS) modulation scheme.

According to an optional feature of the invention, the data receiver circuit comprises a second synchronous detector being arranged to generate second data value estimates from a second down converted signal generated by downconverting the measured output circuit signal using a second downconversion signal having a second reference frequency; and wherein the output generator is arranged to generate the received data values in dependence on the second data value estimates, the second reference frequency being different from the first reference frequency.

This may provide improved performance in many embodiments and may specifically in many embodiments and applications allow improved load modulation communication resulting in improved power transfer operation.

According to an optional feature of the invention, the second reference frequency is set to the drive frequency.

This may provide particularly advantageous operation in many scenarios and in particular may typically provide a more reliable detection in typically most scenarios while also allowing reliable detection of received data values in many more challenging situations.

According to an optional feature of the invention, the second reference frequency is a higher harmonic frequency of the drive frequency.

This may provide improved performance in many embodiments.

According to an optional feature of the invention, the output generator is arranged to generate the received data values by combining the first data value estimates and the second data value estimates.

According to an optional feature of the invention, the first reference frequency is a predetermined frequency.

This may provide improved performance in many embodiments and may allow a low complexity implementation in many cases.

According to an optional feature of the invention, the first reference frequency has a predetermined relationship to the drive frequency.

This may provide improved performance in many embodiments.

According to an optional feature of the invention, the data receiver circuit comprises a frequency circuit arranged to determine the first reference frequency dependent on a property of at least one of the drive signal and the measured output circuit signal.

This may provide particularly advantageous operation and/or performance in many embodiments.

According to an optional feature of the invention, the frequency circuit is arranged to generate a frequency domain signal by applying a time domain to frequency domain transform to the at least one of the drive signal and the output circuit signal; and to determine the first reference frequency dependent on the frequency domain signal.

This may provide improved performance in many embodiments and may specifically in many embodiments and applications allow improved load modulation communication resulting in improved power transfer operation.

According to an optional feature of the invention, the frequency circuit is arranged to determine signal levels for higher harmonics of the drive frequency in the at least one of the drive signal and the output circuit signal; and to select the first reference frequency as a frequency of one of the higher harmonics of the drive frequency in dependence on the signal levels for the higher harmonics.

This may provide improved performance in many embodiments and may specifically in many embodiments and applications allow improved load modulation communication resulting in improved power transfer operation.

According to an optional feature of the invention, the frequency circuit is arranged to determine the first reference frequency in dependence on at least one parameter of at least one of the drive signal and the measured output circuit signal, the parameter being selected from the group of: a power level; a frequency; a duty cycle; an amplitude; and a coupling factor.

This may provide improved performance in many embodiments and may specifically in many embodiments and applications allow improved load modulation communication resulting in improved power transfer operation.

According to an optional feature of the invention, the frequency circuit is arranged to determine the first reference frequency by selecting from a group of frequencies of higher harmonics of the drive frequency/the first reference frequency.

This may provide improved performance in many embodiments and may specifically in many embodiments and applications allow improved load modulation communication resulting in improved power transfer operation.

In some embodiments, the frequency circuit is arranged to determine the first reference frequency by selecting from a group of frequencies of higher harmonics of the first reference frequency.

According to an optional feature of the invention, the sense circuit is arranged to adapt a sample rate for the measured output circuit signal dependent on the first reference frequency.

According to an optional feature of the invention, the data receiver circuit is arranged to switch the first reference frequency between the frequency of the drive signal and the higher harmonic frequency of the drive signal in response to a communication quality indication for at least one of the first reference frequency being the drive frequency and the first reference frequency being the higher harmonic frequency of the drive frequency.

This may provide improved performance in many embodiments and may specifically in many embodiments and applications allow improved load modulation communication resulting in improved power transfer operation yet allow low complexity implementations.

According to another aspect of the invention, there is provided a method of operation for a wireless power transmitter wirelessly providing power to a power receiver via an electromagnetic power transfer signal, the method comprising: an output circuit comprising a power transfer coil generating the electromagnetic power transfer signal in response to a drive signal being provided to the output circuit; generating the drive signal for the output circuit to generate the electromagnetic power transfer signal; receiving data from the power receiver, the data being load modulated on the electromagnetic power transfer signal; and wherein receiving data comprises: generating a measured output circuit signal being a signal describing at least one of a current, voltage, and power signal of the output circuit; a generating first data value estimates from a first downconverted signal generated by downconverting the measured output circuit signal using a first downconversion signal having a first reference frequency; and generating the received data values in dependence on the first data value estimates; wherein the first downconversion frequency is a higher harmonic of a drive frequency being a frequency of the drive signal.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which:
FIG. 1 illustrates an example of elements of a power transfer system in accordance with some embodiments of the invention;
FIG. 2 illustrates an example of elements of a power transmitter;
FIG. 3 illustrates an example of a half bridge inverter for a power transmitter;
FIG. 4 illustrates an example of a full bridge inverter for a power transmitter;
FIG. 5 illustrates an example of elements of a power receiver in accordance with some embodiments of the invention;
FIG. 6 illustrates an example of a power supply path for the power receiver of FIG. 5;
FIG. 7 illustrates an example of a elements of a data receiver circuit for a power transmitter in accordance with some embodiments of the invention;
FIG. 8 illustrates an example of a elements of a data receiver circuit for a power transmitter in accordance with some embodiments of the invention;
FIG. 9 illustrates an example of a elements of a data receiver circuit for a power transmitter in accordance with some embodiments of the invention; and
FIG. 10 illustrates an example of drive signals for a transmitter coil of a power transmitter.

### DETAILED DESCRIPTION OF THE EMBODIMENTS

The following description focuses on embodiments of the invention applicable to a high power wireless power transfer system utilizing a power transfer approach such as known from the Qi Specification. However, it will be appreciated that the invention is not limited to this application but may be applied to many other wireless power transfer systems.

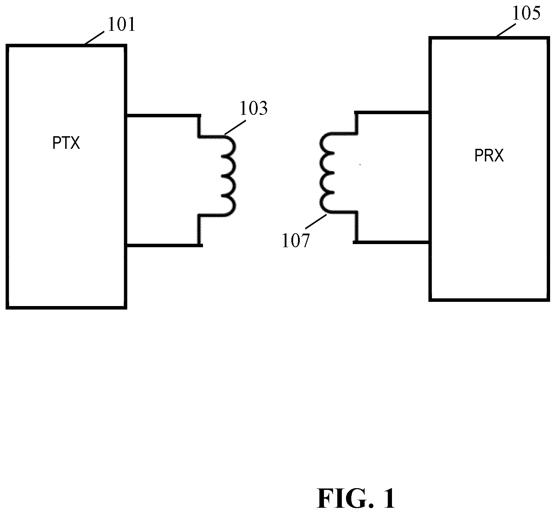

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an inductive electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. The power transfer signal may typically have a frequency between around 20 kHz to around 500 kHz, and in many practical systems, such as in particular Qi, may be in the range of 87kHz-205kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element.

In the following, the operation of the power transmitter 101 and the power receiver 105 will be described with specific reference to an embodiment generally in accordance with the Qi Specifications (except for the herein described (or consequential) modifications and enhancements).

Many wireless power transfer systems utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

Normally, a wireless power transfer system employs a power control loop in order to steer the system towards the appropriate operating point. This power control loop changes the amount of power that is transmitted from the power transmitter to the power receiver. The received power (or voltage or current) can be measured and together with the setpoint power value, an error signal can be generated. The power receiver sends this error signal to the power control function in the power transmitter to reduce the static error, ideally to zero.

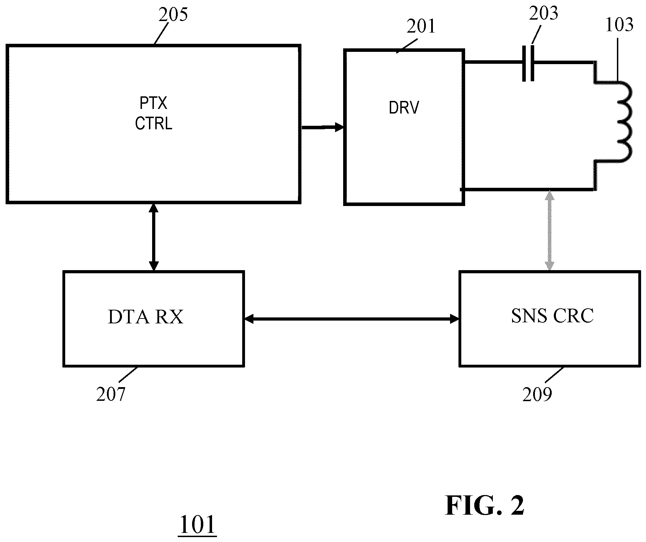

FIG. 2 illustrates elements of the power transmitter 101 of FIG. 1 in more detail.

The power transmitter 101 includes a driver 201 which can generate a drive signal that is fed to the transmitter coil 103 which in return generates the electromagnetic power transfer signal thereby providing a power transfer to the power receiver 105. The transmitter coil 103 is part of an output resonance circuit which comprises the transmitter coil 103 and a capacitor 203. In the example, the output resonance circuit is a series resonance circuit, but it will be appreciated that in other embodiments, the output resonance circuit may be a parallel resonance circuit. It will be appreciated that any suitable resonance circuit may be used including one using multiple inductors and/or capacitors.

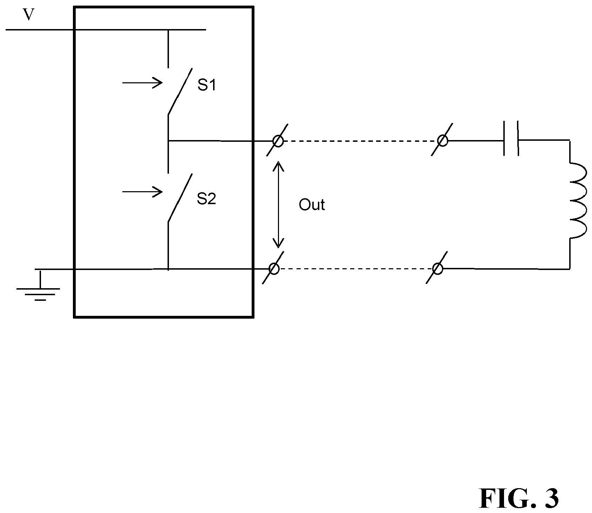

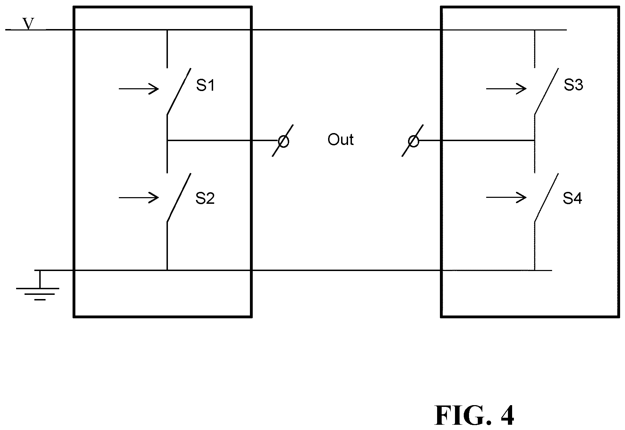

The driver 201 generates the current and voltage which is fed to the output resonance circuit and thus to the transmitter coil 103. The driver 201 is typically a drive circuit in the form of an inverter which generates an alternating signal from a DC Voltage. The output of the driver 201 is typically a switch bridge generating the drive signal by the appropriate switching of switches of the switch bridge. FIG. 3 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 4 shows a full-bridge switch bridge/ inverter. The switches S1 and S2 are controlled such that they are never closed at the same time. The switches S3 and S4 are controlled such that they are never closed at the same time. Alternatingly switches S1and S4 are closed while S2 and S3 are open, and then S2 and S3 are closed while S1 and S4 or open, thereby creating a square-wave signal at the output. The switches are opened and closed with the desired frequency.

The power transmitter 101 further comprises a power transmitter controller 205 which is arranged to control the operation of the power transmitter 101 in accordance with the desired operating principles. Specifically, the power transmitter 101 may include many of the functionalities required to perform power control in accordance with the Qi Specification.

The power transmitter controller 205 is in particular arranged to control the generation of the drive signal by the driver 201, and it can specifically control the power level of the drive signal, and accordingly the level of the generated power transfer signal. The power transmitter controller 205 comprises a power loop controller controlling a power level of the power transfer signal in response to the power control messages received from the power receiver 105 during the power transfer phase.

The power transmitter 101 comprises a data receiver 207 which is arranged to receive data transmitted to the power transmitter 101 from the power receiver 105. The data is transmitted by load modulation where the power receiver 105 changes a loading of the power transfer signal in accordance with data symbols being communicated.

The power transmitter comprises a sense circuit 209 which is arranged to generate a measured output circuit signal as a signal describing at least one of a current, voltage, and power signal of the output circuit. The measured output circuit signal is a time varying signal that represents/is a measure of a time varying signal of the output circuit, and specifically it may represent/be a measure of a voltage over and/or a current through the power transfer coil of the output circuit and/or of a resonance capacitor (for an output circuit comprising a resonance circuit). The measured output circuit signal may often be a copy of the output circuit signal, in some cases including potentially some scaling and filtering. In most cases, the sense circuit 209 includes a digital to analog converter to convert the output circuit signal into a digitized measured output circuit signal.

The sense circuit 209 is coupled to the data receiver 207 which proceeds to receive/demodulate/decode the load modulation on the power transfer signal based on the measured output circuit signal, and specifically by detecting load modulation on the measured output circuit signal using coherent/synchronous detection as will be described in more detail later.

As will be known to the skilled person, the received data may be used to control the operation of the power transmitter, and in particular may be used to adapt one or more parameters of the power transfer (or the power transfer operation). For example, the received data may be power control data used to operate the power control loop. The received data symbols are typically fed from the data receiver 207 to the power transmitter controller 205 which may adapt the operation of the power transfer in response to this data. For example, power error data may be received and the power transmitter controller 205 may adapt the power level of the drive signal thereby implementing the power control loop with the power receiver 105. Thus, the power transmitter controller 205 may be arranged to adapt an operational parameter of the power transfer operation in dependence on the data received from the power receiver.

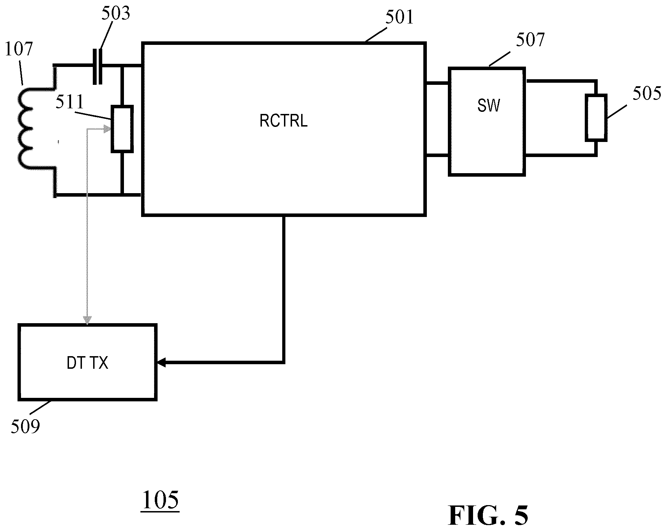

FIG. 5 illustrates some exemplary elements of the power receiver 105. In the example, the receiver coil 107 is coupled to a power receiver controller 501 via a capacitor 503 which together with the receiver coil 107 forms an input resonance circuit. Thus, the power transfer may be a resonant power transfer between resonance circuits. In other embodiments, only one, or none, of the power receiver and the power transmitter may utilize a resonance circuit for power transfer.

The power receiver controller 501 couples the receiver coil 107 to a load 505 via a switch 507. The power receiver controller 501 includes a power control path which converts the power extracted by the receiver coil 107 into a suitable supply for the load 505. In some embodiments, the power receiver controller 501 may provide a direct power path which simply connects the input resonance circuit to the switch 507 or load 505, i.e. the power path of the power receiver controller 501 may simply be implemented by two wires. In other embodiments, the power path may include e.g. rectifiers and possibly smoothing capacitors to provide a DC voltage. In yet other embodiments, the power path may include more complex functions, such as e.g. voltage control circuitry, impedance matching circuitry, current control circuitry etc. Similarly, it will be appreciated that the switch 507 may only be present in some embodiments and that in some embodiments the load 505 may permanently be coupled to the input resonance circuit.

In addition, the power receiver controller 501 may include various power receiver controller functionality required to perform power transfer, and in particular functions required to perform power transfer in accordance with the Qi Specifications.

The power receiver 105 is arranged to transmit data to the power transmitter 101. Such data may specifically include power control loop error messages used to implement a feedback power loop for controlling the power level of the power transfer signal during power transfer as will be known to the skilled person. The power receiver may in many embodiments be capable of transmitting a range of different messages serving different purposes as known to the skilled person. For example, a range of different messages such as those specified in the Qi Specifications may be transmitted. Messages may comprise one or more data bits/ symbols.

The power receiver is arranged to transmit messages to the power transmitter using load modulation.

As will be well known to the skilled person, for load modulation, changes in the loading of the power transfer signal may be introduced by the power receiver where the changes are in accordance with data values to be transmitted. These changes can then be detected by the power transmitter in order to decode the data from the power receiver.

Load modulation may be used as the method for the power receiver to communicate control messages, or other data, to the power transmitter in accordance with e.g. the Qi wireless power standard.

There are typically two main ways of performing load modulation, namely either to directly change the resistive load/ power extraction of the input circuit and/or to detune the resonance of the input circuit e.g. by changing a reactive loading of the input circuit (typically switching a capacitor in/out in line with data to be transmitted). Similar approaches may be used by the power receiver for load modulating the power transfer signal. Thus, load modulation may use real and/or reactive load changes.

The power receiver 105 comprises a data transmitter 509 which is arranged to transmit data to the power transmitter 101 by load modulating the power transfer signal.

In the example, the data transmitter 509 is arranged to control a variable load 511 that provides a modulation loading of the power transfer signal. Variations in the value of the variable load 511 results in a changed effective load provided to the receiver coil 107. As a result, the induced power (real and/or reactive) changes and thus the loading of the power transfer signal by the receiver coil 107 changes. The loading of the receiver coil 107/ the power transfer signal is dependent on the value of the variable load. Specifically, changes in the value of the variable load results in changes in the loading of the power transfer signal. The data transmitter 509 is arranged to load modulate the power transfer signal by varying the value of the variable load thereby varying the modulation loading of the power transfer signal. The modulation loading is a variable loading of the power transfer signal providing the load modulation of the power transfer signal. The modulation loading can be considered to be/correspond to/ represent a load and/or impedance value of the variable load.

Thus, the data transmitter 509 is arranged to change the value of the variable load in dependence on data symbol values being transmitted thereby providing a varying modulation loading of the power transfer signal.

The data transmitter 509 is coupled to the variable load 511 and is arranged to modify this in response to the data symbols to be transmitted. Thus, the data transmitter 509 is arranged to vary the variable load to provide a modulation loading of the power transfer signal. The data transmitter 509 may specifically be arranged to provide a modulation loading pattern for each data symbol where the modulation loading pattern is dependent on the data symbol value. The modulation loading pattern is different for different data symbol values. The power transmitter may accordingly estimate a modulation load pattern for the power transfer signal and determine the data symbol value based on this detected modulation load pattern, e.g. by selecting the data symbol value that is most likely to have resulted in the received load pattern (maximum likelihood demodulation).

In many embodiments, the variable load may be a binary variable load having two possible load values. Further, in many embodiments, the variable load may be a purely resistive load or a purely reactive load. For example, the variable load may be a resistor or capacitor that can be switched between being decoupled from the input circuit and being coupled to the input circuit (e.g. effectively being switched on/off). The data transmitter 509 may be arranged to control the switch that switches the resistor/ capacitor in out.

For example, the data transmitter 509 may be arranged to switch in/out a communication capacitor (or other impedance) e.g. positioned in parallel with the power receiver controller 501 or with the resonance capacitor 503 thereby being able to vary the resonance frequency and the loading of the power transfer signal.

The modulation load pattern may in some embodiments be a very simple pattern and may indeed in some embodiments correspond to a single constant value. For example, a binary modulation may be achieved by the load impedance being switched in or out depending on the data symbol value being modulated onto the power transfer signal. For example, for a "1" value a modulation capacitor may be switched out of the input circuit (not coupled to the input circuit) for the entire symbol duration and for a "0" value a modulation capacitor may be switched in the input circuit (coupled to the input circuit) for the entire symbol duration. However, in many embodiments, each data symbol is typically represented by more complex modulation load patterns, and modulation load patterns may in many embodiments include at least two different modulation load levels.

In some embodiments, the communication from the power receiver to the power transmitter may be performed using a spread spectrum load modulation communication scheme for at least some transmissions/ data messages.

A spread spectrum load modulation communication scheme, which in the specific example may be a Direct Sequence Spread Spectrum (DSSS) or specifically a Differential Direct Sequence Spread Spectrum (DDSSS) modulation scheme, may be one in which each data symbol is represented by a spreading chip sequence (which may also be referred to as a modulation chip sequence) with the specific pattern of the chip sequence being dependent on the data symbol being transmitted.

The data transmitter 509 may specifically be arranged to provide a spreading chip sequence/ modulation loading pattern/modulation chip sequence for each data symbol where the spreading chip sequence /modulation loading pattern/ modulation chip sequence is dependent on the data symbol value. The spreading chip sequence/modulation loading pattern/ modulation chip sequence is different for different data symbol values. The power transmitter may accordingly estimate a modulation load pattern for the power transfer signal and determine the data symbol value based on this detected spreading chip sequence/modulation load pattern/chip sequence, e.g. by selecting the data symbol value that is most likely to have resulted in the received spreading chip sequence/load pattern/chip sequence (maximum likelihood demodulation).

In more detail, the power transmitter 101 and power receiver 205 may use a load modulation approach (in the direction from the power receiver to the power transmitter) which modulate each symbol using a modulation chip sequence comprising a plurality of chips. The data transmitter 509 is specifically arranged to transmit data symbols by load modulating the power transfer signal by a sequence of modulation load values corresponding to a chip spreading sequence. The data transmitter 509 may transmit the data symbols using an approach that is e.g. similarly to a (D)DSSS modulation which uses a spreading chip sequence to modulate the data symbols. The data symbols/ bits are modulated by a (typically pseudorandom) bit spreading sequence also sometimes referred to as just a spreading sequence or a chip sequence. Each spreading-sequence "bit", which is commonly known as a chip, has a much shorter duration (larger bandwidth) than the original message bits/symbols. Such an approach may allow reduced load depth resulting in reduced (or no) audible noise and rectified voltage ripple.

In some embodiments each symbol is represented by a spreading chip sequence comprising a plurality of chips, and typically with a sequence comprising 5 to 1023 chips. Thus, rather than simply varying the load in accordance with each symbol or bit, the data transmitter 509 may be arranged to transmit a given symbol (typically a bit) by a series of load changes and variations where the changes and variations are different for each symbol. Specifically, a chip sequence may be defined for each symbol and when transmitting a given symbol, the data transmitter 509 may retrieve the chip sequence for that specific symbol and proceed to load modulate the power transfer signal in accordance with the chip sequence for the symbol.

In many cases, each chip may be directly linked with a constant load level during the chip duration. For example, for binary chip values, each chip may be represented by the variable load 511 having one of two values, such as typically a modulation load (mostly a capacitor or resistor) being switched in or out of the circuit during the chip interval. Thus, a chip value of "0" may be represented by the modulation load being switched out and a chip value of "1" may be represented by the modulation load being switched in (or vice versa). In some embodiments, each chip may be differentially encoded, such as a load transition occurring or not, or with the direction of a transition indicating the chip value. For example, a chip value of "0" may be represented by the modulation load transitioning from a high load to a low load during the chip interval and a chip value of "1" may be represented by the modulation load transitioning from a low load to a high load during the chip interval (or vice versa).

In some embodiments, each chip of a chip sequence may be represented by a modulation loading transition occurring during the chip. Each load modulation chip in such case thus comprises at least two different modulation loading values/ values of the variable load. For example, as for a differential data symbol modulation, the individual chips may be modulated by a bi-state transition approach. For example, one chip value may be represented by a transition from a lower modulation loading to a higher modulation loading, and another chip value may be represented by a transition from a higher modulation loading to a lower modulation loading. In such examples, each chip sequence may be represented by a modulation loading pattern that has two modulation loading values for each chip.

Such an approach, also referred to as Differential-Direct Sequence Spread Spectrum (DDSSS), may provide substantial advantages by allowing a receiver to determine the chip values simply by considering the difference between two measured load values for each chip. However, further it may increase the switch rate and may make this more predictable thereby allowing an improved correspondence between the switch operation in the communication time intervals and the non-communication time intervals.

In some embodiments, the spreading chip sequence for each possible data symbol value may accordingly comprise a load spreading chip sequence of at least 5, and in some cases at least 7, 11, 15, 31, or 63 load modulation chips.

The power transmitter may detect the load modulation by considering the whole chip sequence, and specifically may seek to determine the received symbol as the one for which the measured load variation chip pattern most closely matches the chip sequence pattern for that symbol.

Thus, in some embodiments a direct sequence spread spectrum load modulation may be used with each data symbol value being represented by a different spreading chip sequence / loading pattern.

Such an approach may in particular allow the modulation depth, i.e. the magnitude of the load variations to be reduced substantially which may for example reduce electromagnetic noise and interference, may reduce acoustic noise, and may reduce the probability and effect of power signal oscillations. It may also in many embodiments result in improved signal to noise ratios and may result in a substantially improved and often more reliable communication with e.g. often a lower bit error rate. Thus, a general overall improved power transfer can be achieved.

In the approach, each of a number of chip sequences may be assigned to one data symbol. Thus, each possible data symbol value that may need to be transmitted to the power transmitter may have a linked/ associated spreading chip sequence / modulation loading pattern. For example, where only two data symbols are possible, i.e. where a binary communication is implemented, the set of chip sequences may comprise only two chip sequences. Each possible data symbol value may be linked/ represented by one spreading chip sequence. Thus, for a given data symbol value to be transmitted, the corresponding/ linked spreading chip sequence is determined and modulated on to the power transfer signal by load modulation. For example, where only two data symbols are possible, i.e. where a binary communication is implemented, the set of chip sequences may comprise only two chip sequences.

In many embodiments, one or more chip sequences may be represented by a relationship to another chip sequence. For example, for binary communication, the data transmitter 509 may store a single spreading chip sequence corresponding to one of the binary data values. The chip sequence for the other binary data value may be represented by the same stored bit sequence as it may be given as the inverse of the stored bit sequence. Thus, often the set of chip sequences utilizes complementary inverse chip sequences for pairs of data symbols and therefore only half of the used chip sequences are typically explicitly stored/ determined in the data transmitter 509 with the remaining chip sequences being automatically and implicitly stored/ determined as the inverse of these.

Thus, in some embodiments, the spreading chip sequences may include inverse chip sequences. Equivalently, the same spreading chip sequence can be considered to represent two data symbol values, and specifically two binary data symbol values.

The spreading chip sequence is for a given data symbol to be transmitted selected from a set of spreading chip sequences, and in the example the data transmitter 509 provides a set of spreading chip sequences with each chip sequence being linked to a data symbol value. Typically, the set of spreading chip sequences comprises a chip sequence for each possible data symbol value. It will be appreciated that the data transmitter 509 may store the chip sequences in any suitable form and does not need to store a full sequence for each possible data symbol. For example, a given spreading chip sequence may be multiplied by a binary symbol value represented by the values 1, -1. At the receiving end, i.e. at the power transmitter, the data value may then be determined by a correlation with the given spreading chip sequence, and a determination of the corresponding binary data value dependent on whether this is a positive or negative correlation.

In many embodiments, binary communication may accordingly be used where only two data symbol values are possible (corresponding to a "0" bit value or a "1" bit value). In such cases, one bit value may be represented by a given chip sequence and the other bit value may be associated with the inverse bit sequence, i.e. the bit sequence that results from changing each chip value to the opposite value. The two bit sequences are thus typically complementary with one resulting from the other by multiplication by -1 (with the chip values being represented by +1 and -1).

A particular advantage in such a case is that demodulation is particularly easy as a single correlation can be used to differentiate between bit values as the magnitude of the correlation is the same for the chip sequences, but the signs of the correlation values are opposite.

It will be appreciated that it is equivalent to consider data symbols represented by inverse spreading chip sequences to be represented by one chip sequence or by two chip sequences. It will be appreciated that such a binary approach with two inverse chip sequences being used is equivalent to considering that the two possible binary values are modulated by the same chip sequence but with the data symbols having opposite data values (e.g. +1 and -1).

The data transmitter 509 may be coupled to the power receiver controller 501 and may be arranged to receive data from the power receiver controller 501 for transmission to the power transmitter 101.

For example, the data transmitter 509 may receive power error control data from the power receiver controller 501 and may transmit corresponding power error control messages to the power transmitter 101 using load modulation. In operation, the system is typically arranged to control the drive signal such that the power transfer signal attains suitable operating parameters/ properties and such that the power transfer operates at a suitable operating point. In order to do so, the power transmitter is arranged to control a parameter of the drive signal using a power control loop where a power property of the power transfer signal/ drive signal is controlled in response to power control error messages that are received from the power receiver.

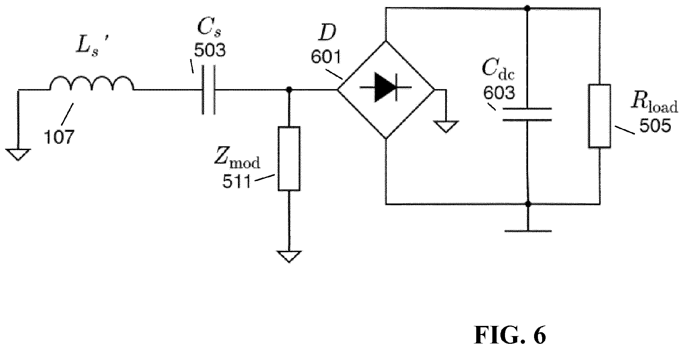

The power path of the power receiver may specifically have a simplified equivalent circuit corresponding to the circuit shown in FIG. 6. The input circuit 107, 503 is coupled to a rectifier 601, the output of the rectifier 601 is coupled to a smoothing capacitor 603. The load 505 is coupled to the smoothing capacitor 603.

The output level, and specifically the voltage provided to the load, thus depends directly on the level of the power transfer signal/ the electromagnetic field strength. The power control loop implemented by the power control loop provides continuous and dynamic adaption of the level of the power transfer signal to provide the desired power to then load. For example, the voltage at the smoothing capacitor may be measured and if it drops below a lower threshold, power up messages may be transmitted to the power transmitter 101 increasing the level of the power transfer signal. If the capacitor voltage increases above a higher threshold, power down messages may be transmitted to the power transmitter 101 resulting in this reducing the level of the power transfer signal.

The detection of load modulation at a power transmitter may in principle be performed simply by measuring an amplitude load/power level of the envelope of the drive signal/power transfer signal and determining the load modulation symbols from the variations thereof. However, although this may provide efficient communication in many scenarios, it is not ideal as interference and noise may affect the measured amplitude levels and potentially result in erroneous detections.

An improved approach is to use coherent demodulation/synchronous detection. In such coherent demodulation/synchronous detection, the modulated signal is multiplied by a local reference sinusoid having the same frequency as the carrier of the modulated signal. This may result in signal components being generated in a base band close to zero Hz (typically from zero to the bandwidth of the modulation) and in signal components around twice the carrier/downconversion frequency (in multiplicative mixing the sum and difference frequencies are generated). The higher frequencies around twice the carrier frequency are filtered out to result in a downconverted/base band signal. Thus, the approach generates a resulting base band signal with amplitude variations corresponding to the load modulation symbols.

The multiplication with a local sinusoid being in phase with the carrier signal is referred to as the In-phase (I) signal or component and this I-signal may retain the amplitude of the load modulation. The multiplication with a local sinusoid having a 90° phase offset with the carrier signal is referred to as the Quadrature (Q) signal or component. The Q-signal is orthogonal to the I-signal.

Although it is possible to implement a load modulation data detection based only on the I-signal, it requires that the local sinusoid is phase locked accurately to the carrier signal which in wireless power transfer systems is often difficult to achieve sufficiently accurately and quickly.

Instead, a combined down-conversion with two local sinusoids with a 90° phase offset may be used resulting in two down-converted/base band signals. The root square sum of the downconverted base band signal components is identical to the amplitude of the signal being downconverted regardless of the phase offset between the carrier signal and the downconversion sinusoids. Therefore, in some systems, coherent demodulation/synchronous detection of load modulation of a carrier (specifically the power transfer signal) may be performed by a quadrature down-conversion using sinusoids that are 90° out of phase but not necessarily phase locked to the carrier signal. An amplitude signal may then be determined as the root square amplitude (or a suitable approximation thereto, e.g. in some cases simply as the sum of the amplitude of the two base band signals), and the demodulated symbol values can be determined from the resulting amplitude signal (often by a filtering using a matched filter that reflects the symbol shape, typically a square wave for a wireless power transfer system). Thus, using a quadrature downconversion demodulation, it can be avoided that an accurate phase lock to the carrier signal is necessary. Although, such a quadrature downconversion may not be using downconversion sinusoids with exact 0 and 90° phase offsets to the carrier frequency, the resulting signal components are still typically referred to as I and Q signals.

However, although such synchronous detection/coherent demodulation may provide improved detection performance in comparison to simple amplitude measurement based detections, the Inventors have realized that it does not provide ideal performance in all scenarios. The Inventors have in particular realized that for the particular situation of load modulation in a wireless power transfer system, the nature of the power transfer signal (and the drive signal) is such that ideal performance is not always achieved. In particular, the nature of the wireless power transfer operation, the drive signal and power transfer signal tend to not be ideal as a carrier for the load modulation for the purpose of synchronous detection/coherent demodulation and thus may in many scenarios result in reduced communication performance and specifically in an increased error rate.

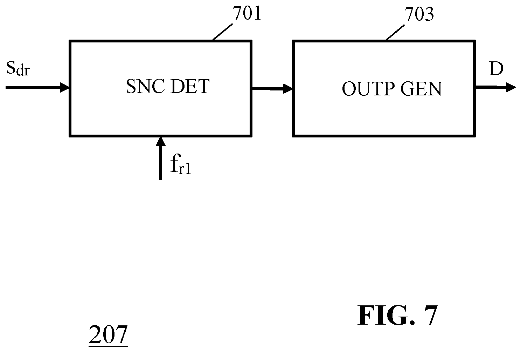

FIG. 7 illustrates an example of an element of the data receiver circuit 207 in accordance with some embodiments of the invention. The data receiver circuit 207 includes a first synchronous detector 701 which is arranged to generate first data value estimates from a first downconverted signal which is generated by downconverting the measured output circuit signal using a first downconversion signal having a first reference frequency. For example, the first synchronous detector 701 may include a multiplier multiplying the measured output circuit signal by the first downconversion signal which may be a sinusoid having a given first reference frequency. The resulting signal may in most embodiments be filtered to remove the sum frequency (although in some embodiments this may not be necessary, e.g. if sampling of the downconverted signal is suitably synchronized and suitably undersamples the first downconverted signal with respect to the sum frequency). The resulting first downconverted signal may accordingly correspond to the amplitude envelope of the measured output circuit signal which may directly be sampled to provide amplitude, and thus load modulation values, for each data symbol. In many embodiments, a (data symbol) matched filter may be applied with the output of the matched filter being sampled at the appropriate sample instants to generate amplitude/load modulation values for each data symbol.

Such an approach may include a phase locked loop for synchronizing the phase, but as previously mentioned this is in many cases avoided using multiple downconversions with downconversion signals 90° out of phase may be used to generate I and Q components from which an amplitude estimate may be generated, e.g. by simple summation or using a root square function.

Thus, the first synchronous detector 701 may generate first data value estimates in the form of amplitude/load modulation values for each data symbols. Such first data value estimates may specifically be considered soft decision values for the load modulation data symbols.

The first synchronous detector 701 is coupled to an output generator 703 which is arranged to generate the received data values for the load modulation from the received first data value estimates. In many embodiments, the first data value estimates may simply be compared to a threshold and binary data values may be determined dependent on whether the individual first data value estimates are above or below the threshold. Indeed, in some embodiments, soft decision received data values could be generated, e.g. by generating the soft decision received data values by subtracting an amplitude offset (e.g. the average amplitude) from the first data value estimates. In many cases, generation of soft-decision values could include truncating the data values to provide a lower resolution soft-decision value (e.g. converting 8 bits to 3 bit soft-decision).

In the data receiver circuit 207 of FIG. 7, the first synchronous detector 701 does not perform down-conversion using the frequency of the drive signal, i.e. it does not downconvert using the carrier frequency of the carrier being modulated. Instead, the first synchronous detector 701 is arranged to perform the downconversion using a first downconversion signal for which the frequency, i.e. the first reference frequency, is a (frequency of a) higher harmonic of the (fundamental) frequency of the drive signal, henceforth referred to as drive frequency, and thus the frequency of the power transfer signal. The higher harmonic may be a second, third, fourth etc. harmonic of the drive frequency. The first reference frequency may thus be substantially a multiple of the drive frequency, with the multiple being an integer of 2 or higher.

Thus, in contrast to conventional synchronous detections where the downconversion is by a signal having the same frequency as the carrier frequency of the carrier being down modulated, the downconversion in the first synchronous detector 701 is employing a downconversion frequency which is a higher harmonic frequency of the carrier frequency (a higher harmonic (frequency) of a given frequency is the frequency of a higher harmonic (signal component) of a fundamental frequency equal to the give frequency. A harmonic frequency is a frequency that is a positive integer multiple of the fundamental frequency of a periodic signal. A higher harmonic frequency is a frequency that is a positive integer multiple of a fundamental frequency where the integer is two or more).

The drive frequency is specifically the fundamental frequency/lowest frequency of the periodic drive signal (typically corresponding to the lowest frequency of the sinusoidal components of the drive signal. The drive frequency indeed is typically the first (lowest) frequency with a signal level above a noise level for a frequency representation of the drive signal).

In the approach, the load demodulation is accordingly a synchronous detection/coherent load modulation which is however based on a higher harmonic downconversion. The approach is based on the Inventors' realization that for a wireless power transfer where the power transfer signal is load modulated, such an approach may in many cases provide improved demodulation and detection. It may in many scenarios provide improved and/or additional information on the load modulated symbols. For example, in some scenarios an improved signal to noise ratio, with resulting improved detection, may be achieved. The inventors have not only realized that the load modulation quality, such as e.g. impacted by distortion, noise and/or interference, is often frequency dependent. In addition, the inventors have realized that for power transfer systems such as Qi, the drive signal for which detection is performed is typically not a sinusoidal, but rather typically is a substantially square wave signal, and that it accordingly may include a plurality of different sinusoidal components, including in particular a set of harmonics with the fundamental frequency being equal to the frequency of the drive signal. The described approach may utilize such realizations and considerations.

In many cases, the first reference frequency may specifically be a third harmonic frequency of the drive frequency, i.e. it may be three times the drive frequency. This may reflect that for a square wave signal, the third harmonic sinusoid tends to be substantially higher than the second harmonic sinusoid (which in principle may zero for a pure square wave signal).

In some embodiments, the first synchronous detector 701 may be fixed to perform downconversion using a predetermined first reference frequency, such as specifically a first reference frequency which is the second or third multiple/higher harmonic of the drive frequency.

In many embodiments, the first synchronous detector 701 may provide the only detection and/or downconversion being performed, and the received data values may be determined based only on the first data value estimates. However, in many embodiments, the detection may consider other data in addition to the first data value estimates.

For example, in some embodiments, the data receiver circuit 207 may include a non-synchronous amplitude detector, such as specifically a detector that rectifies and low pass filters the measured output circuit signal to generate an amplitude estimate/signal. Non-synchronous data value estimates may be generated from this (e.g. by a simple symbol time sampling, e.g. with an offset subtracting the average amplitude value), and the resulting non-synchronous data value estimates may be fed to the output generator 703 where they are used with the first data value estimates to determine the received data values. For example, the received data values may be determined as the non-synchronous data value estimates unless a quality criterion (e.g. a bit error rate or signal to noise ratio estimate) is not met, in which case the received data values may be determined as the first data value estimates.

In many embodiments, the data receiver circuit 207 comprises a plurality of synchronous detectors which are arranged to operate with different reference frequencies.

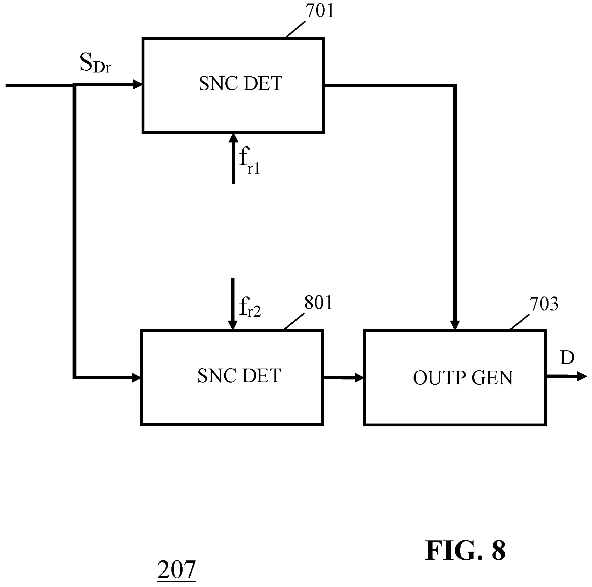

FIG. 8 illustrates an example corresponding to the example of FIG. 7 but with the first synchronous detector 701 being complemented by a second synchronous detector 801 which generates second received data values. The second synchronous detector 801 may operate as previously described for the first synchronous detector 701 but with the downconversion being based on a second downconversion signal having a second reference frequency which is different from the first reference frequency.

In many embodiments, the first synchronous detector 701 and the second synchronous detector 801 may be implemented as parallel functions that may operate simultaneous and in parallel. In other embodiments, the first synchronous detector 701 and the second synchronous detector 801 may e.g. be implemented by a sequential operation where e.g. the same function is repeated with different reference frequencies to sequentially generate the first received data values and the second received data values for a given time segment.

Indeed, in some cases, a single synchronous detector may be used to perform synchronous detection using different reference frequencies and indeed may be switched between such different reference frequencies.

For example, at start-up, the first synchronous detector 701 may be arranged to demodulate load modulation based on a downconversion with a first reference frequency equal to the drive frequency. The resulting communication quality may be measured (e.g. as a bit error rate or a signal to noise ratio for detected data symbols) and as long as this is above a threshold, demodulation may continue based on the first reference frequency being equal to the drive frequency. However, if it falls below the threshold, the first reference frequency may be switched to a higher harmonic frequency, such as to the third harmonic frequency of the drive frequency. The reference frequency may be maintained as the third harmonic frequency until the quality measure falls below the threshold, at which a new reference frequency may be adopted (e.g. it may switch back to the drive frequency or e.g. try a higher harmonic frequency).

In the approach of FIG. 8, the second received data values are like the first received data values fed to the output generator 703 which is further arranged to generate the received data values also in consideration of the second received data values.

In some embodiments, the output generator 703 may be arranged to select between using the first received data values and using the second received data values to calculate the output received data values. This may for example be based on a quality estimate for respectively the first and second received data values. For example, a bit error rate or a signal to noise ratio may be estimated (e.g. based on error correcting coding detecting errors or a variance in the amplitude levels estimating a noise level). The output generator 703 may then select the first or second received data values that have the best quality measure. The output generator 703 may then generate corresponding output soft or hard decision received data values as preferred for the individual embodiment and application.

In some embodiments, the output generator 703 may be arranged to generate combined received data values by combining the first and second received data values. In some cases, as e.g. described in the previous paragraph, selection combination may be performed where the combined received data values are selected as the first received data values or the second received data values depending on the quality criterion. In some embodiments, a linear or non-linear weighted combination may be performed. For example, the combined received data values may be generated as a weighted sum of the first received data values and the second received data values. The weights may in some cases be fixed and predetermined, such as e.g. by applying equal weights to both the first and second received data values (e.g. both weights being 0.5). In some cases, such weights may be different in order to e.g. prioritize the received data values for a specific reference frequency (e.g. lower harmonics may be prioritized higher than higher harmonics). In some embodiments, the weights may be dynamically adapted, such as e.g. the weights being made dependent on a quality measure. The weights may for example be set to combine to have unity gain but with a higher value being allocated to the received data values that have a higher quality measure.

The output received data values may then be generated from the combined received data values, e.g. by a hard decision binary value being generated to reflect if the combined received data values are above or below a threshold (corresponding to e.g. the average amplitude level or a predetermined amplitude level).

In many embodiments, the second reference frequency is set to the drive frequency. Thus, in many embodiments, the received data values may be determined by synchronous detection at both the drive frequency and a higher harmonic frequency, i.e. by synchronous downconversion of both the fundamental frequency component and a higher harmonic frequency component. This may provide particularly advantageous operation in many embodiments and in particular may allow increased reliability and robustness to interference etc.

In some embodiments, the second reference frequency may also be a higher harmonic of the drive frequency, and indeed may be a higher harmonic frequency than, or even of, the first reference frequency. This may often be highly advantageous as the impact of distortion, degradation, noise, interference and other degradations may often be frequency specific and substantially different for different higher harmonics, and basing detection/demodulation on such different harmonics may substantially increase the robustness of the demodulation/detection process.

In many embodiments, the data receiver circuit 207 may include three or more synchronous detectors each downconverting different harmonics (and typically with one synchronous detector downconverting the drive frequency). For example, the data receiver circuit 207 may include three synchronous detectors with reference frequencies of respectively the drive frequency, twice the drive frequency, and three times drive frequencies.

Using higher harmonics for synchronous detection may provide improved communication in many scenarios. As a particular example, the approach may mitigate the effect of modulation black holes. Such modulation black holes may be an effect that occurs when the change of the load on the power receiver side cannot be detected on the power transmitter side as the transfer function for the power transfer signal path does not change with the change of the modulation load at the power receiver. Such effects occur in practice but have been realized to typically occur only at very specific frequencies whereas at other frequencies the transfer function will be dependent on the modulation load, and accordingly the load modulation can be detected at the power transmitter at these frequencies. Another specific advantageous effect is in many cases that the approach is more robust to the presence of spurious oscillations. For example, if spurious oscillations occur in a frequency range close to the drive frequency, it may be very difficult (if not impossible to filter it out). However, the impact at harmonic frequencies may be negligible or even not present.

In many embodiments, the reference frequency for one or more of the synchronous detectors may be a fixed predetermined frequency. For example, in some embodiments, the drive frequency may be a predetermined frequency which is kept constant for the power transfer. For example, a Qi power transmitter may be designed to always operate with a drive frequency of, say, 128kHz with the power control being achieved by e.g. change to the duty cycle or amplitude of the drive signal. In such cases, the first reference frequency may for example be set to 196 kHz. In cases where multiple synchronous detections are used, other reference frequencies may e.g. be 128 kHz and 256kHz (or e.g. 640kHz corresponding to the fifth harmonic). Such an approach may provide highly efficient and robust performance yet allow low complexity implementations.

In some embodiments, the resonance frequencies may be variable to reflect e.g. a varying drive frequency being used for power control. However, in such cases, a predetermined relationship may be used to determine the first reference frequency relative to the drive frequency. For example, it may fixedly be set to be three times higher (corresponding to the third harmonic). In embodiments with multiple synchronous detections, the relationship between the reference frequencies may be fixed. For example, the second reference frequency may always be set to be 1/3rd of the first reference frequency, or e.g. 5/3rds of the first reference frequency.

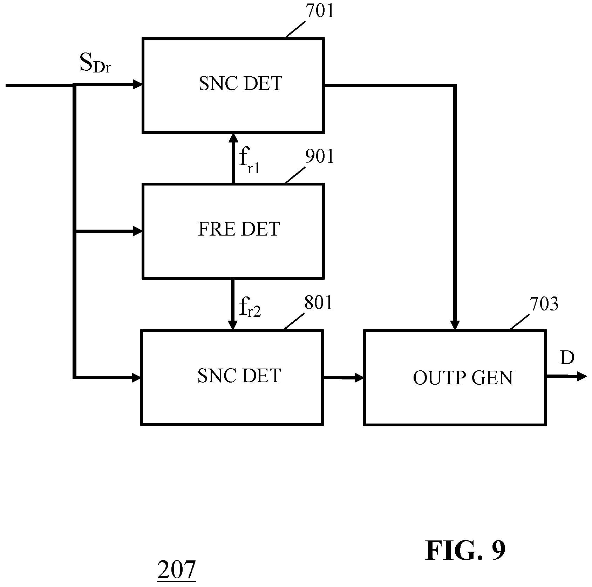

In some embodiments, the data receiver circuit 207 may be arranged to determine the resonance frequency(ies) dynamically. An example of such an approach is illustrated in FIG. 9 in which the example of FIG. 8 is enhanced with the inclusion of a frequency determiner 901 arranged to determine the reference frequencies used by the synchronous detectors.

In some embodiments, the frequency determiner 901 may be arranged to perform a relatively low complexity approach. For example, as previously described, the reference frequencies may be determined using a predetermined relationship to the drive frequency (and to each other). Specifically, the functionality device may determine the drive frequency and e.g. generate the first reference frequency as three times the drive frequency and the second reference frequency as the drive frequency (and more generally with any reference frequency being generated as a predetermined integer multiple of the drive frequency).

In many cases, the frequency determiner 901 may be arranged to determine the reference frequency or frequencies based on a property of the drive signal and/or the measured output circuit signal. The measured output circuit signal is a signal of the output circuit which is fed the drive signal and the measured/sensed measured output circuit signal accordingly directly provides an indication of the drive signal. Typically, many properties will be the same, such as a frequency, duty cycle, and the measured output circuit signal may directly be used as a representation of the drive signal. For example, rather than directly determining the reference frequencies as multiples of the drive frequency measured from the drive signal, the frequency determiner 901 may proceed to determine the reference frequencies as multiples of the drive frequency as measured from the measured output circuit signal.

The dynamic determination of reference frequencies may often consider or include other properties of the drive signals and/or the measured output circuit signal and the reference frequencies may not simply be determined from a predetermined relationship of the reference frequencies. In many embodiments, one or more of the reference frequencies, and specifically the first reference frequency, may be determined from one or more of the following properties of the drive signal or the measured output circuit signal:
a power level;
a duty cycle;
an amplitude; and
a coupling factor.

These parameters may affect the presence of harmonics in the drive signal and/or may affect the frequency dependent interference or degradation, and the determination of the reference frequencies may accordingly take these parameters into account.

For example, the frequency determiner 901 may consider a set of possible harmonic frequencies that could be selected for the first reference frequency. This set may for example include all (or e.g. only odd or even) harmonics up to, say, the seventh harmonic (other numbers may of course be used in different embodiments).

Based one or more of the above parameters, the harmonic content of the drive signal for the specific operating point may be estimated and one or more of the harmonics from the set may be selected as appropriate reference frequencies.

In many embodiments, measurements of drive signals and harmonic components may be performed during manufacturing and/or design for a range of different operating values of one or more of the above mentioned parameters. For each measured operating point, the parameter values and the most desirable higher harmonic frequency may be recorded and stored. The data may be stored in a look-up-table which is included in the power transmitter. During use, the current operating parameter value(s) may be determined and a look-up in the look-up-table may be performed with the stored higher harmonic frequency for the set of operating parameters most closely matching the current operating parameters being extracted. The first reference frequency may then be set to the extracted higher harmonic. It will be appreciated that further look-up-tables may be generated and included for further harmonics in case the data receiver circuit 207 includes more synchronous detectors for detection based on higher harmonics. The approach may allow for a highly advantageous operation and communication over a range of operating points.

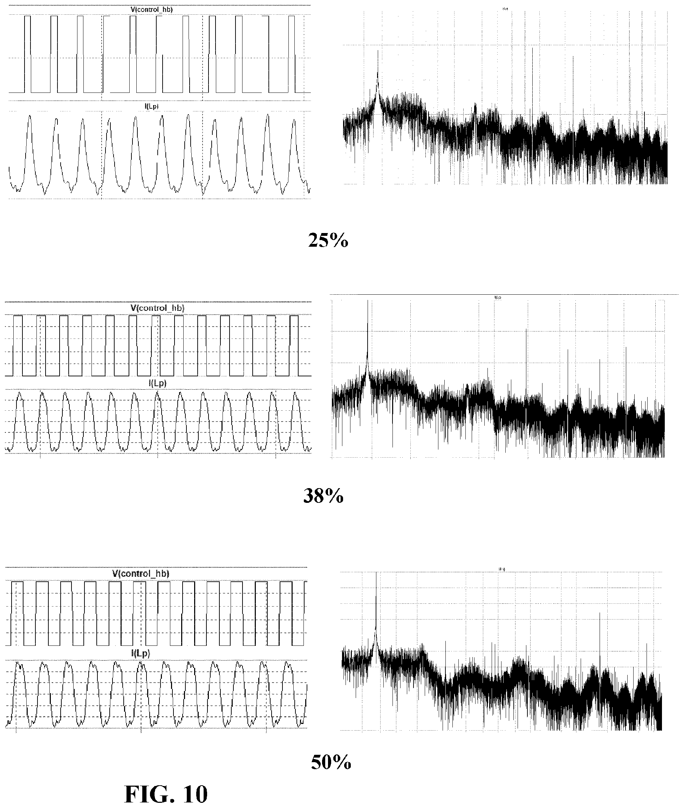

As an example, the change of duty cycle of a half-bridge inverter results in different shape waveforms and, as a result, in a different harmonic content of the drive signal. A few examples are shown in FIG. 10 where different duty cycles (respectively 25%, 38%, and 50%) are applied to a half-bridge inverter to create a different current through the transmitter coil 203, with in particular the current having a different harmonic content depending on the duty cycle. From the example of FIG. 10, it can be seen that the 2nd harmonic power is reducing with an increased duty cycle while the power of the 3rd harmonic increases. Accordingly, the first reference frequency may for lower values of the duty cycle be set to the 2nd harmonic and for higher values of the duty cycle be set to the 3rd harmonic.

Similar effects can be found for the coupling factor which affects the shape of the primary current (and the power signal in general) and thus also affects the measured output circuit signal. Similarly, changes in the power level (which may e.g. be measured/indicated by the amplitude, current, and/or voltage of e.g. the drive signal or the measured output circuit signal) typically results in a change in the signal shape, and thus in changed harmonic content. Typically, the assumption that the harmonic content reduces with increasing power may be used.

In many embodiments, the frequency determiner 901 may be arranged to determine signal levels for higher harmonics of the drive frequency in the drive signal and/or the output circuit signal. It may then proceed to select the first reference frequency as one of the higher harmonics of the drive frequency based on the signal levels determined for the higher harmonics. In many embodiments, the first reference frequency may specifically be selected as the higher harmonic component with the highest signal level. In some embodiments, the first reference frequency may for example be selected as the higher harmonic with the second, third etc. highest level (e.g. if an additional synchronous detector is arranged to always downconvert based on e.g. the 3rd harmonic).

In some embodiments, the signal levels may be measured e.g. using dedicated narrow filters tuned to the different higher harmonic frequencies being considered (such an approach may e.g. be suitable for some embodiments where the drive frequency is fixed). In some embodiments, the signal levels may be determined/estimated based on a set of operating parameters such as for example by considering the duty cycle and an expected/estimated/measured relationship between the signal levels of higher harmonics and the duty cycle.

In some embodiments, the frequency determiner 901 is arranged to apply a time domain to frequency domain conversion (frequency transform) to the drive signal and/or the measured output circuit signal. The resulting frequency domain signal/spectrum is then analyzed and the first reference frequency (as well as potentially other reference frequencies) may be determined based on the properties of the frequency domain signal. For example, the frequency determiner 901 may be arranged to detect a peak in the spectrum and if the peak aligns sufficiently with a higher harmonic, the frequency determiner 901 may proceed to set the first reference frequency to this value. The peak may for example be detected by searching increasing frequencies starting from the drive frequency, and thus may represent the lowest frequency peak in the spectrum (higher than the drive frequency). If the peak does not sufficiently align with a higher harmonic of the drive frequency, the peak detection may proceed to detect the next peak. The process may be repeated until a peak is detected which matches a higher harmonic or may be stopped with no matching peaks being detected. In the latter case, the first synchronous detector 701 may not be used for the demodulation and e.g. synchronous detection based only on the drive frequency may be performed.

In some embodiments, the frequency determiner 901 may for example determine the power/energy in a narrow frequency interval around each higher harmonic. It may then select the first reference frequency, as well as possibly other reference frequencies, dependent on the determined signal levels. For example, the first reference frequency may be set to the higher harmonic having the highest signal level.

In some embodiments, the number of parallel synchronous detections that are considered to determine the output received data values may be modified or changed dynamically. For example, a quality indication may be determined for the generated received data values and if this is below a threshold, an additional synchronous detection may be included and if it is above a threshold a synchronous detection may be removed from the pool of active synchronous detections.

In some embodiments, the sample rate of the measured output circuit signal may be adapted depending on the first reference frequency (or possibly based on one of the other reference frequencies). For example, the sample rate may be set to ensure that the Nyquist sampling theorem is met for the highest harmonic downconversion frequency (and typically with a suitable margin). For example, the sampling rate/frequency may be set to be e.g. 3 or 4 times higher than the highest reference frequency used for downconversion/synchronous detection. In many cases, a given sampling rate may be used by the system but may further be increased in case a higher harmonic frequency is selected than cannot be represented without aliasing using the nominal sampling rate. It will be appreciated that increasing (or changing) the sample rate may be associated with a corresponding increase (or change) in the low pass anti-alias filter implemented as part of the sampling process.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. The inclusion of a feature in a dependent claim of one independent claim does not imply a limitation to this independent clam but rather indicates that the feature is equally applicable to other independent claims as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

## Claims

1. A wireless power transmitter (101) for wirelessly providing power to a power receiver (105) via an electromagnetic power transfer signal, the power transmitter (101) comprising:
an output circuit (103, 203) comprising a power transfer coil (103) arranged to generate the electromagnetic power transfer signal in response to a drive signal being provided to the output circuit (103, 203);
a driver (201) arranged to generate the drive signal for the output circuit (103, 203) to generate the electromagnetic power transfer signal;
a data receiver circuit (207) arranged to receive data from the power receiver (105) the data being load modulated on the electromagnetic power transfer signal; and
a sense circuit (209) arranged to generate a measured output circuit signal being a signal describing at least one of a current, voltage, and power of the output circuit (103, 203); and wherein the data receiver circuit (207) comprises:
a first synchronous detector (701) arranged to generate first data value estimates from a first downconverted signal generated by downconverting the measured output circuit signal using a first downconversion signal having a first reference frequency;
an output generator (703) arranged to generate the received data values in dependence on the first data value estimates; and
the first reference frequency is a higher harmonic frequency of a drive frequency being a frequency of the drive signal.

2. The power transmitter of claim 1 wherein the data receiver circuit (207) comprises a second synchronous detector (801) being arranged to generate second data value estimates from a second down converted signal generated by downconverting the measured output circuit signal using a second downconversion signal having a second reference frequency; and wherein the output generator (703) is arranged to generate the received data values in dependence on the second data value estimates, the second reference frequency being different from the first reference frequency.

3. The power transmitter of claim 2 wherein the second reference frequency is set to the drive frequency.

4. The power transmitter of claim 2 wherein the second reference frequency is a higher harmonic frequency of the drive frequency.

5. The power transmitter of any of claims 2 to 4 wherein the output generator (703) is arranged to generate the received data values by combining the first data value estimates and the second data value estimates.

6. The power transmitter of any previous claim wherein the first reference frequency is a predetermined frequency.

7. The power transmitter of any previous claim wherein the first reference frequency has a predetermined relationship to the drive frequency.

8. The power transmitter of any previous claim wherein the data receiver circuit (207) comprises a frequency circuit (901) arranged to determine the first reference frequency dependent on a property of at least one of the drive signal and the measured output circuit signal.

9. The power transmitter of previous claim 8 wherein the frequency circuit (901) is arranged to generate a frequency domain signal by applying a time domain to frequency domain transform to the at least one of the drive signal and the output circuit signal; and to determine the first reference frequency from the frequency domain signal.

10. The power transmitter of previous claim 8 or 9 wherein the frequency circuit (901) is arranged to determine signal levels for higher harmonics of the drive frequency in the at least one of the drive signal and the output circuit signal; and to select the first reference frequency as a frequency of one of the higher harmonics of the drive frequency in dependence on the signal levels for the higher harmonics.

11. The power transmitter of any previous claims 8-10 wherein the frequency circuit (901) is arranged to determine the first reference frequency in dependence on at least one parameter of at least one of the drive signal and the measured output circuit signal, the parameter being selected from the group of:
a power level;
a frequency;
a duty cycle;
an amplitude; and
a coupling factor.

12. The power transmitter of any previous claims 8-11 wherein the frequency circuit (901) is arranged to determine the first reference frequency by selecting from a group of frequencies of higher harmonics of the drive frequency.

13. The power transmitter of any previous claim wherein the sense circuit (209) is arranged to adapt a sample rate for the measured output circuit signal dependent on the first reference frequency.

14. The power transmitter of any previous claim wherein the data receiver circuit (207) is arranged to switch the first reference frequency between the drive frequency and the higher harmonic frequency of the drive frequency in response to a communication quality indication for at least one of the first reference frequency being the drive frequency and the first reference frequency being the higher harmonic frequency meeting a criterion.

15. A method of operation for a wireless power transmitter (101) wirelessly providing power to a power receiver (105) via an electromagnetic power transfer signal, the method comprising:
an output circuit (103, 203) comprising a power transfer coil (103, 203) generating the electromagnetic power transfer signal in response to a drive signal being provided to the output circuit (103, 203);
generating the drive signal for the output circuit (103, 203) to generate the electromagnetic power transfer signal;
receiving data from the power receiver (105) the data being load modulated on the electromagnetic power transfer signal; and wherein receiving data comprises:
generating a measured output circuit signal being a signal describing at least one of a current, voltage, and power of the output circuit (103, 203);
a generating first data value estimates from a first downconverted signal generated by downconverting the measured output circuit signal using a first downconversion signal having a first reference frequency; and
generating the received data values in dependence on the first data value estimates;
wherein the first reference frequency is a higher harmonic of a drive frequency being a frequency of the drive signal.
